# EUROPÄISCHE PATENTSCHRIFT

(11) **EP 2 455 242 B1**
(45) Veröffentlichungstag und Bekanntmachung des Hinweises auf die Patenterteilung: **24.04.2013**
(21) Anmeldenummer: 10014721.4
(22) Anmeldetag: 18.11.2010
(51) Int. Cl.: B60D 5/00

(54) **Anordnung zur Bildung des Balges eines Übergangs oder der Seitenwand zwischen zwei gelenking miteinander verbundenen Fahrzeugen**
Assembly for forming the bellows of a transition or the side wall between two vehicles with a jointed connection
Agencement de formation du soufflet d'un passage ou de la paroi latérale entre deux véhicules reliés de manière articulée

(43) Veröffentlichungstag der Anmeldung: 23.05.2012
(73) Patentinhaber: Hübner GmbH, 34123 Kassel (DE)
(72) Erfinder: Zolotov, Roman, 34123 Kassel (DE)
(74) Vertreter: Walther, Walther & Hinz GbR

(56) Entgegenhaltungen:
- EP-A1- 1 990 563
- EP-A1- 2 149 461
- EP-A1- 2 258 568
- DE-A1- 4 127 535
- DE-A1- 19 638 154
- DE-A1- 19 721 285
- US-A- 5 456 186

## Beschreibung

Die Erfindung betrifft eine Anordnung zur Bildung des Balges eines Übergangs oder der Seitenwand zwischen zwei gelenkig miteinander verbundenen Fahrzeugen, z. B. einem Schienenfahrzeug oder einem Gelenkbus, wobei die Anordnung eine Mehrzahl von nebeneinander angeordnete Falten umfasst.

Eine Anordnung der eingangs genannten Art ist aus dem Stand der Technik hinreichend bekannt. So sind Falten- oder Wellenbälge als Teil eines Überganges zwischen gelenkig miteinander verbundenen Fahrzeugteilen bekannt, wobei ein solcher Balg tunnelartig ausgebildet ist, und die Brücke, und gegebenenfalls auch das die beiden Fahrzeugteile verbindende Gelenk umgibt. Derartige Falten- oder Wellenbälge werden sowohl bei Schienenfahrzeugen, als auch bei Bussen eingesetzt. Insbesondere bei Hochgeschwindigkeitszügen, also z. B. bei einem ICE werden sowohl zur Geräuschdämmung als auch zur Verminderung der Druckstöße, wenn ein solcher Zug beispielsweise in einen Tunnel einfährt, bei einem Übergang Doppelwellenbälge verbaut. Diese Bälge, bei denen ein äußerer und beabstandet zum äußeren Balg zusätzlich ein an der Stirnseite des jeweiligen Fahrzeugs angeordneter innerer Wellenbalg vorgesehen ist, bewirken sowohl eine thermische Isolierung als auch eine Geräuschdämmung; sie sind auch in der Lage, die zuvor genannten Druckstöße zu mildern. Insbesondere zur Vermeidung von Druckstößen ist die Steifigkeit des Balges von hoher Relevanz.

Insbesondere im Schienenfahrzeugbereich ist bekannt, einzelne Waggons lediglich durch Kupplungen miteinander zu verbinden, wobei eine solche Kupplung im Sinne der Erfindung ebenfalls als gelenkige Verbindung angesehen wird. Bei solchen Waggons eines Schienenfahrzeugs, die durch Kupplungen miteinander verbunden sind, ist es nicht unüblich, die Waggons untereinander nicht durch einen Übergang, das heißt durch eine Brücke und einen Balg zu verbinden. Das heißt, die Fahrzeugteile oder Waggons besitzen keine Verbindung untereinander, die ein Hinüberwechseln von Personen von dem einen Fahrzeugteil in das andere Fahrzeugteil ermöglichen würden, wie dies der Fall ist, wenn ein solcher Übergang vorgesehen wäre. Wenn die Fahrzeuge lediglich durch eine Kupplung miteinander verbunden sind, ist der Durchtritt zwischen den Fahrzeugen möglich. Dies gilt insbesondere, wenn sich auf der Kupplung, was auch öfters der Fall ist, eine Kupplungsplatte befindet, die lediglich dazu gedacht ist, dem Bedienungspersonal das Hinüberwechseln oder das Aufstehen auf der Kupplung zu Wartungszwecken zu ermöglichen. Es hat sich allerdings herausgestellt, dass diese Kupplungsplatte bzw. auch die Kupplung selbst dazu benutzt wird, zwischen den Fahrzeugen auf der Kupplung an der Fahrt teilzunehmen. Dieses sogenannte "Surfen" hat zu vielen Unfällen geführt.

Darüber hinaus sind schienengebundene Gelenkfahrzeuge bekannt, die durch einen Übergang miteinander verbunden sind, wobei der Balg zwischen 10 und 30 cm nach innen versetzt zwischen den beiden Fahrzeugteilen verläuft. Insofern besteht auch ein Spalt zwischen Bahnsteigkante und Balg.

Deshalb kann es, insbesondere bei Gedränge auf dem Bahnsteig dazu kommen, dass Personen unbeabsichtigt in den Bereich des Zwischenraumes zwischen Balg und Bahnsteigkante gelangen und unter besonders widrigen Umständen auf das Gleisbett fallen könnten. Denkbar ist in diesem Zusammenhang eine Seitenwand außenhautbündig zwischen den Fahrzeugteilen verlaufen zu lassen.

In diesemZusammenhang soll eine Seitenwand zur Abdeckung des seitlichen Abstands zwischen Balg und Bahnsteigkante allerdings auch steif genug sein, um zu verhindern, dass bei einer Einbauchung der Seitenwand eines Balges Personen mit dem Bein in den Raum zwischen Balg und Bahnsteigkante gelangen können. Dies gilt in gleichem Zusammenhang auch für eine Seitenwand zwischen zwei Fahrzeugfalten ohne Übergangsbalg, um das 'U-Bahn-Surfen' zu unterbinden.

In diesem Zusammenhang ist aus der US 5,456,186 A eine gattungsgemäße Ausbildung eines Wellenbalgs bekannt, wobei der Wellenbalg aus zwei Balglagen besteht, die durch ein Gewebe miteinander verbunden sind. Hierdurch wird eine solchermaßen hergestellte Balgwand verstärkt, um ein Durchhängen des Balges zu vermeiden oder das Durchhängen zu vermindern.

Die der Erfindung zugrunde liegende Aufgabe besteht demzufolge darin, eine Anordnung für einen Balg bereitzustellen, die sich, um ein Einbauchen zu vermindern oder zu verhindern, über ihre Fläche durch eine hohe Steifigkeit bei erhöhter Auszugsweite auszeichnet.

Die Lösung der Aufgabe ergibt sich aus dem Kennzeichen des Anspruchs 1 in Verbindung mit dem Oberbegriff. Die Lösung zeichnet sich im Einzelnen dadurch aus, dass zumindest auf einer Seite der Mehrzahl an Falten jeweils eine Welle in einer Falte angeordnet ist, wobei die Enden der jeweiligen Falte und der Welle miteinander verbunden sind; hierbei weisen eine Mehrzahl von Falten auf ihrer Innenseite, also dem Innenraum des Wagenkastens zugewandt, insbesondere mindestens eine etwa mittig auf der Seitenwand oder mittig auf einem Seitenwand-, Decken- oder Bodenabschnitt eines tunnelartig umlaufenden Balges im Bereich des jeweiligen Faltenscheitels oder Faltenrückens angeordneten Schlitz auf. Durch einen solchen Schlitz wird insbesondere die Auszugsweite noch etwas erhöht, ohne dass eine solche Maßnahme mit Einschränkungen hinsichtlich der Steifigkeit einhergehen würde. Vorteilhaft ist allerdings, wenn nicht nur ein solcher Schlitz vorgesehen ist, sondern bei einer Seitenwand als solche, neben einer mittigen Anordnung des Schlitzes, auch zu beiden Enden jeweils eine schlitzartige Ausgestaltung zu finden ist. Dies vor dem Hintergrund, dass nach einem weiteren Merkmal der Erfindung zur Erhöhung der Steifigkeit und auch zur Erhöhung der Federwirkung zum Zwecke des Zusammenziehens der Seitenwand bzw. auch des Balges, die Faltenwände zweier benachbarter Falten im Bereich des Schlitzes verbunden sind, beispielsweise dadurch, dass die Verbindung durch mindestens eine Naht erfolgt, die sich über die Tiefe der Faltenwand erstreckt. Die Naht bewirkt nicht nur eine Erhöhung der Steifigkeit der Seitenwand bzw. auch eines vollständig in dieser Weise hergestellten Balges, sondern erhöht ebenfalls auch noch die Federwirkung, die notwendig ist, damit sich der Balg ordnungsgemäß nach der Auslenkung wieder zusammenzieht Das heißt, Gegenstand der Erfindung ist nicht nur die Kombination einer Falte mit einer Welle, wobei die Welle Bestandteil einer jeden Falte ist, wobei sowohl die Falten, als auch die Wellen aus einem mit Kunststoff beschichteten Festigkeitsträger z. B. einem Gewebe hergestellt sind. Es hat sich allerdings herausgestellt, dass durch eine solche Kombination bereits eine erhebliche Erhöhung der Steifigkeit einer solchermaßen hergestellten Seitenwand, als auch eines solchermaßen hergestellten Balges zu erzielen ist, ohne dass irgendwelche Einbußen hinsichtlich der Dehnbarkeit eines solchen Balges oder der Seitenwand als Folge der Kombination von Falte und Welle zu erkennen sind.

Vorteilhafte Merkmale zu der Erfindung ergeben sich aus den Unteransprüchen.

Vorteilhaft ist eine solche Naht bei einer Seitenwand sowohl am oberen als auch am unteren Ende vorgesehen, um ein gleichmäßiges Auseinander- und Zusammenziehen der Seitenwand zu ermöglichen. Gleiches gilt prinzipiell auch für den Aufbau eines Balges, und zwar insofern, dass über den Umfang eines solchen U-förmig oder tunnelförmig umlaufenden Balges zumindest im Bereich eines jeden Balgabschnittes ein solcher Schlitz mit einer entsprechenden Naht vorgesehen ist. Insbesondere die Anbringung derartiger Schlitze im Eckbereich eines Balges sorgt für eine erhöhte Auszugsweite in diesem Bereich, was die Aufnahme von Wank- und Nickbewegungen bzw. von übergelagerten Bewegungen aus Wank-, Nick und Knickbewegungen begünstigt.

Nach einem weiteren besonderen Merkmal der Erfindung ist die Falte im Übergang zur Stirnseite des Wagenkastens eines Fahrzeugteils an zumindest einer ihrer Hoch- oder Längskanten und zumindest einer vorzugsweise jedoch beider Hochkanten der Falte mit der Stirnseite des Wagenkastens verbunden. Hieraus wird deutlich, dass die Falte nicht nur beispielsweise über eine Längskante mit der Stirnseite des Fahrzeugs in Verbindung steht, sondern quasi vollflächig. Hierdurch ergibt sich eine weitere Erhöhung der Steifigkeit des Balges oder auch einer Soloseitenwand, und zwar insofern, als hierdurch die Einbauchung bei auftretender äußerer Belastung weiterhin eingeschränkt wird. In diesem Zusammenhang ist im Einzelnen die Falte im Übergang zur Stirnseite mit einem Rahmen versehen, wobei der Balg oder die Seitenwand mit der Stirnseite des Fahrzeuges durch diesen Rahmen verbindbar ist.

Ein in der erfindungsgemäßen Weise hergestellter Balg oder eine Seitenwand ist, wie dies bereits an anderer Stelle dargelegt wurde, in Richtung quer zur Längsachse des Fahrzeugs äußerst stabil, wobei bei einem solchermaßen hergestellten Balg insbesondere auch gilt, dass dieser in besonderem Maße in der Lage ist, Druckstöße abzufangen und darüber hinaus eine Seitenwand als Soloseitenwand wirksam ebenfalls ein Einbauchen bei Einwirkung von Querkräften verhindert.

Nach einem weiteren Merkmal der Erfindung ist vorgesehen, dass die Welle ihre Ausbauchung in die gleiche Richtung aufweist, wie dies bei der aufnehmenden Falte der Fall ist. Die Maßnahme dient nicht nur der Erhöhung der Steifigkeit, sondern ist darüber hinaus auch platzsparend. So ist insbesondere vorgesehen, dass die Enden der Falte und der Welle durch einen im Querschnitt im U-förmigen Rahmen verbunden sind. Bei einer Seitenwand als solcher erstreckt sich der Rahmen lediglich über die Höhe der Seitenwand; bei einem Balg ist in diesem Zusammenhang ein zumindest U-förmiger oder auch umlaufender Balgrahmen vorgesehen. Anhand der Zeichnungen wird die Erfindung nachstehend beispielhaft näher erläutert.
Figur 1 zeigt schematisch ein Gelenkfahrzeug mit zwei Fahrzeugteilen, die durch einen Übergang miteinander verbunden sind;
Figur 2 zeigt schematisch die erfindungsgemäße Anordnung zur Bildung des Balges eines Übergangs oder einer Seitenwand in einer perspektivischen Darstellung;
Figur 3 zeigt eine Ansicht gemäß Figur 2 in einer Draufsicht;
Figur 4 zeigt einen Schnitt gemäß der Linie IV - IV aus Figur 3;
Figur 5 zeigt eine Ansicht gemäß der Linie V - V aus Fig. 2.

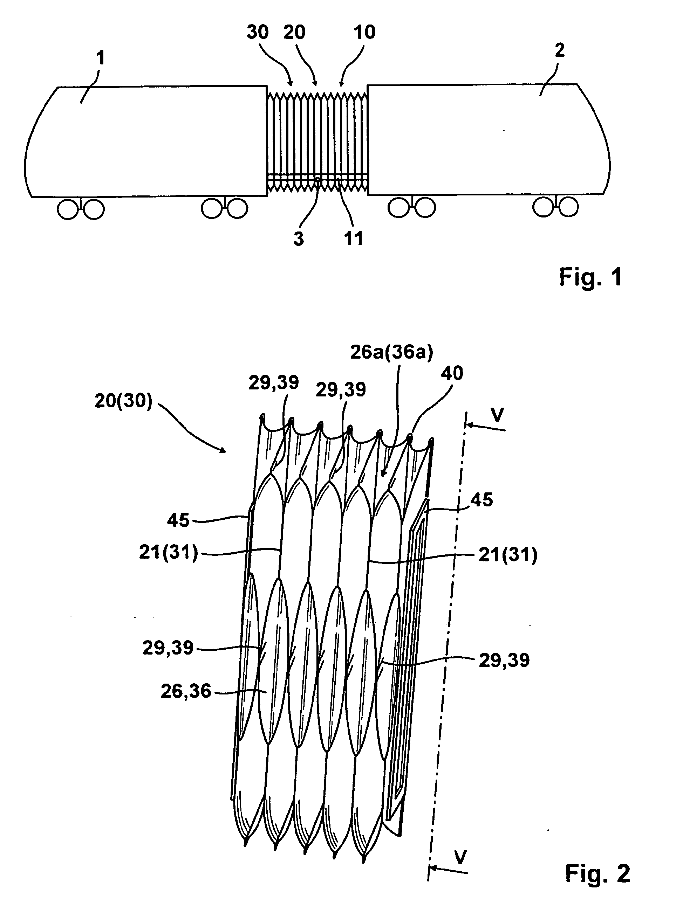

Aus der Darstellung gemäß Figur 1 sind die beiden Fahrzeugteile 1 und 2 erkennbar, die als Schienenfahrzeuge durch eine Kupplung 3 gelenkig miteinander in Verbindung stehen. Durch die Erfindung umfasst sind allerdings nicht nur solche Gelenkfahrzeuge, die durch eine Kupplung miteinander verbunden sind, sondern auch solche, die durch ein Gelenk miteinander in Verbindung stehen. Im Bereich der Kupplung oder des Gelenkes befindet sich der mit 10 bezeichnete Übergang, der zumindest eine Brücke oder Drehscheibe 11 umfasst, und eine Seitenwand 20 oder den Teil eines Übergang bildenden Balges 30.

Gegenstand der Erfindung ist nun die Anordnung zur Bildung des Balges eines Übergangs oder einer Seitenwand. In diesem Zusammenhang wird auf die Figur 2 bis 5 verwiesen. Die Figuren 2 - 4 zeigen eine Seitenwand, entweder als Soloseitenwand zwischen zwei Fahrzeugteilen 1 und 2 zur Überbrückung des Abstandes zwischen diesen beiden Fahrzeugteilen, oder aber die Seitenwand als Teil eines vollständig umlaufenden tunnelartigen Balges, wobei darauf hingewiesen wird, dass auch die übrigen Teile, nämlich Decke und Boden in gleicher Weise ausgebildet sind bzw. sein können wie die Seitenwand. Insofern wird im Folgenden auf eine Seitenwand Bezug genommen, gleichwohl die entsprechenden Darlegungen insoweit natürlich auch auf einen Balg zu treffen, der in Bezug auf Boden, Decke und Wände gleich ausgebildet ist. Die Seitenwand 20 bzw. der Balg 30 weist mehrere Falten 21, 31 auf, wobei eine jede Falte 21, 31 zwei Faltenwände 22, 32, 23, 33 aufweist. Eine jede Falte 21, 31 nimmt mittig eine Welle 27, 37 auf, wobei die Falte 21, 31 mit der Welle 27, 37 im Endbereich (Pfeil 25) durch eine Naht und/oder Klebung miteinander verbunden sind, und zusätzlich gegebenenfalls durch einen U-förmigen Rahmen 40 miteinander fixiert sind. Die Welle 27, 37 weist hierbei mit ihrem Scheitelpunkt in die gleiche Richtung wie der Rücken 24, 34 der Falte 21, 31. In den zeichnerischen Darstellungen verläuft die Welle zwischen zwei Falten benachbart zu den jeweiligen Nähten 29, 30.

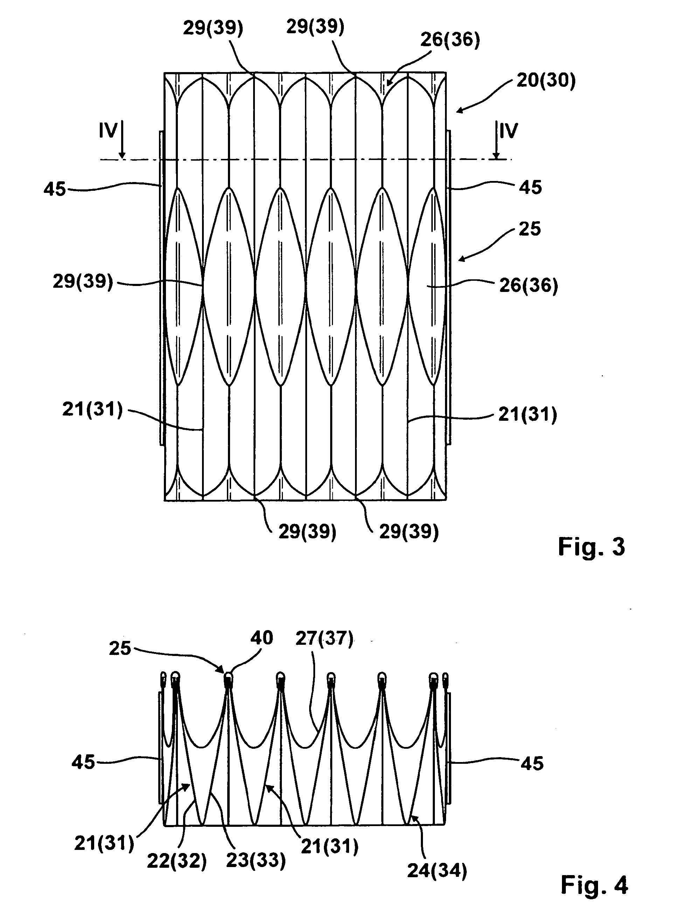

Wie sich aus der Figur 2 aber auch aus der Figur 3 ergibt, ist mittig in der Seitenwand 20 oder Balg 30 im Bereich des Rückens 24, 34 der Falte 21, 31 ein sich längs der Falte erstreckender Schlitz 26, 36 vorgesehen, wobei im Bereich des Schlitzes 26, 36 die Faltenwand 22, 32 mit der Faltenwand 23, 33 der jeweils benachbarten Falte durch eine Naht 29, 39 parallel zur Tiefe der Faltenwand verlaufend verbunden ist. Hierbei wird der Schlitz 26, 36 aufgespreizt, wie sich dies in Anschauung von Figur 2 aber auch von Figur 3 ergibt. In dem Schlitz verläuft die jeweilige Welle. Sowohl bei einer Seitenwand, als auch bei einem Balg sind endseitig die einzelnen Falten ebenfalls geschlitzt (Schlitz 26a, 36a), wobei auch in diesem Bereich, wie bereits zuvor beschrieben, die Faltenwände 22, 32 mit den benachbarten Faltenwänden 23, 33 durch eine entsprechende Naht 29, 39 miteinander verbunden sind. Unter einer Falte wird eine solche verstanden, die eine Welle aufnimmt. An dieser Stelle sei darauf hingewiesen, dass bei einem Balg 30 insbesondere ein solcher Schlitz im Eckbereich eine hohe Auszugsweite zur Verfügung gestellt wird, was zur Übertragung von Wankund Nickbewegungen erforderlich ist.

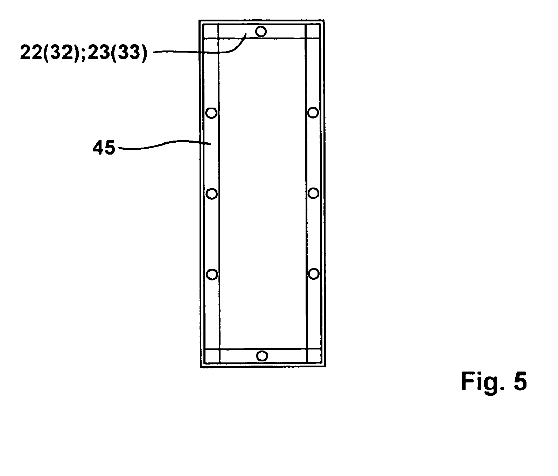

Figur 5 zeigt einen Schnitt gemäß der Linie V - V aus Figur 2, wobei hierbei die letzte Falte 22, 32 bzw. 23, 33 einen Rechteckrahmen 45 zeigen, der umlaufend die Faltenwand erfasst, und zwar mittels dieses Rahmens der Balg 30 oder die Seitenwand an der Stirnseite des Fahrzeugs (nicht dargestellt) befestigt wird. Insbesondere durch die vollflächige Verbindung der Seitenwand bzw. des Balges im Bereich der letzten Falte mit der Stirnseite des Wagenkastens wird die hohe Steifigkeit des Balges verwirklicht.

### Bezugszeichenliste:

| | |
|---|---|
| 1 | Fahrzeugteil |
| 2 | Fahrzeugteil |
| 3 | Kupplung |
| 10 | Übergang |
| 11 | Brücke (Drehscheibe) |
| 21, 31 | Falte |
| 22, 32 | Faltenwand |
| 24, 34 | Faltenrücken (Faltenscheitel) |
| 25 | Pfeil |
| 26, 36 | Schlitz |
| 26a, 36a | Schlitz |
| 27, 37 | Welle |
| 29, 39 | Naht (verbindende Faltenwände) |
| 40 | U-förmiger Rahmen (Balgrahmen) |
| 45 | Rechteckrahmen |

## Patentansprüche

1. Anordnung zur Bildung eines Balges (30) eines Übergangs oder der Seitenwand (20) zwischen zwei gelenkig miteinander verbundenen Fahrzeugen (1, 2), z. B. einem Schienenfahrzeug oder einem Gelenkbus, wobei die Anordnung eine Mehrzahl von nebeneinander angeordneten Falten (21, 31) umfasst, und
dass zumindest auf einer Seite der Mehrzahl an Falten (21, 31) jeweils eine Welle (27, 37) in einer Falte angeordnet ist, wobei die Enden der jeweiligen Falte und der Welle miteinander verbunden sind, **dadurch gekennzeichnet, dass** eine Mehrzahl von Falten (21, 31) auf ihrer Innenseite,
insbesondere mindestens einen etwa mittig auf der Seitenwand oder mittig auf einem Seitenwand-, Decken, oder Bodenabschnitt eines tunnelartig umlaufenden Balges (30), im Bereich des Faltenscheitels (24, 34) angeordneten Schlitz (26, 26a, 36; 36a) aufweisen,
und dass die Faltenwände (22, 32) zweier benachbarter Falten (21, 31) im Bereich des Schlitzes (26, 26a, 36, 36a) miteinander verbunden sind.

2. Anordnung zur Bildung eines Balges eines Übergangs oder der Seitenwand zwischen zwei gelenkig miteinander verbundenen Fahrzeugen nach Anspruch 1,
**dadurch gekennzeichnet,**
**dass** die Enden der Falte (21, 31) und der Welle (27, 37) durch einen im Querschnitt U-förmigen Rahmen (40) verbunden sind.

3. Anordnung zur Bildung eines Balges eines Übergangs oder der Seitenwand zwischen zwei gelenkig miteinander verbundenen Fahrzeugen nach Anspruch 1 oder Anspruch 2.
**dadurch gekennzeichnet,**
**dass** sowohl Welle (27, 37) als auch Falte (21, 31) aus einem mit einem Kunststoff, z. B. einem Elastomer, beschichteten Festigkeitsträger z. B. einem Gewebe, ausgebildet sind.

4. Anordnung zur Bildung eines Balges eines Übergangs oder der Seitenwand zwischen zwei gelenkig miteinander verbundenen Fahrzeugen nach einem der voranstehenden Ansprüche,
**dadurch gekennzeichnet,**
**dass** die Verbindung durch mindestens eine Naht (29, 39) erfolgt, die sich über die Höhe der Faltenwand (22, 32) erstreckt.

5. Anordnung zur Bildung eines Balges eines Übergangs oder der Seitenwand zwischen zwei gelenkig miteinander verbundenen Fahrzeugen nach einem der vorangehenden Ansprüche,
**dadurch gekennzeichnet,**
**dass** die Falte (21, 31) im Übergang zur Stirnseite des Wagenkastens eines Fahrzeugteiles an einer ihrer Längskanten und zumindest einer, vorzugsweise jedoch beider Querkanten mit der Stirnseite des Wagenkastens in Verbindung steht.

6. Anordnung zur Bildung eines Balges eines Übergangs oder der Seitenwand zwischen zwei gelenkig miteinander verbundenen Fahrzeugen nach einem der voranstehenden Ansprüche,
**dadurch gekennzeichnet,**
**dass** die Faltenwand (22, 32) im Übergang zur Stirnseite des Wagenkastens des Fahrzeugteils (1, 2) einen Rahmen (45) aufweist, wodurch der Balg oder die Seitenwand mit der Stirnseite des Fahrzeugs verbindbar ist.

7. Anordnung zur Bildung eines Balges eines Übergangs oder der Seitenwand zwischen zwei gelenkig miteinander verbundenen Fahrzeugen nach einem der vorangehenden Ansprüche,
**dadurch gekennzeichnet,**
**dass** bei einer Seitenwand (20) zusätzlich zur mittigen Verbindung der Faltenwände (22) zweier benachbarter Falten (21) durch eine Naht (29) in einem Schlitz eine eben solche Verbindung durch eine Naht (29) am oberen und unteren Ende der Seitenwand (20) ebenfalls im Bereich eines Schlitzes (26) erfolgt.

8. Anordnung zur Bildung eines Balges eines Übergangs oder der Seitenwand zwischen zwei gelenkig miteinander verbundenen Fahrzeugen nach einem der vorangehenden Ansprüche,
**dadurch gekennzeichnet,**
**dass** bei einem Balg (30) im Eckbereich des Balges (30) jeweils ein Schlitz (36) vorgesehen ist, wobei im Bereich des Schlitzes (36) ebenfalls mindestens eine Naht (39) vorgesehen ist.

9. Anordnung zur Bildung eines Balges eines Übergangs oder der Seitenwand zwischen zwei gelenkig miteinander verbundenen Fahrzeugen nach den Ansprüchen 4, 7 oder 8, oder den Ansprüchen 5 oder 6, wenn von Anspruch 4 abhängig,
**dadurch gekennzeichnet,**
**dass** die Nähte (29, 39) über die Höhe der Faltenwand (22, 32) verlaufen.

## Claims

1. An arrangement for creating a bellows (30) of a passage or the side panel (20) between two vehicles (1, 2) joined in an articulated manner, e.g. a railway vehicle or an articulated bus, wherein the arrangement comprises numerous adjacently disposed pleats (21, 31) and on at least one surface of the numerous pleats (21, 31), respectively one corrugation (27, 37) is disposed in each pleat, wherein the ends of the respective pleats and corrugation are connected to one another,
**characterized in that** the numerous pleats (21, 31) have a slit (26, 26a, 36; 36a) on their inner surface, more specifically at least substantially at the middle on the side panel or at the middle on the side panel, floor or ceiling section of a tunnel-like encompassing bellows (30) in the region of the pleat crease (24, 34), and that the pleat walls (22, 32) of two adjacent pleats (21, 31) are connected to one another in the region of the slit (26, 26a, 36, 36a).

2. The arrangement for creating a bellows of a passage or the side panel between two vehicles joined in an articulated manner according to claim 1,
**characterized in that**
the ends of the pleat (21, 31) and the corrugation (27, 37) are connected by a frame (40) having a U-shaped cross-section.

3. The arrangement for creating a bellows of a passage or the side panel between two vehicles joined in an articulated manner according to claim 1 or claim 2,
**characterized in that**
both the corrugation (27, 37) as well as the pleats (21, 31) are constructed from a reinforcement, e.g. a textile, coated with a plastic, e.g. an elastomer.

4. The arrangement for creating a bellows of a passage or the side panel between two vehicles joined in an articulated manner according to one of the afore-mentioned claims,
**characterized in that**
the connection is made by at least one seam (29, 39), which extends over the height of the pleat wall (22, 32).

5. The arrangement for creating a bellows of a passage or the side panel between two vehicles joined in an articulated manner according to one of the afore-mentioned claims,
**characterized in that**
the pleat (21, 31) in the transition to the end surface of the carriage body of a vehicle segment are connected to the end surface of the carriage body at one of the longitudinal edges and at least one, preferably both, transversal edges.

6. The arrangement for creating a bellows of a passage or the side panel between two vehicles joined in an articulated manner according to one of the afore-mentioned claims,
**characterized in that**
the pleat wall (22, 32) in the transition to the end surface of the carriage body of the vehicle segment (1, 2) has a frame (45), by means of which the bellows or the side panel can be attached to the end surface of the vehicle.

7. The arrangement for creating a bellows of a passage or the side panel between two vehicles joined in an articulated manner according to one of the afore-mentioned claims,
**characterized in that**
with a side panel (20), in addition to the central connection of the pleat wall (22) of two adjacent pleats (21) by a seam (29) in a slit, a connection of this type by means of a seam (39) at the upper and lower ends of the pleat wall (20) also occurs in the region of a slit (26).

8. The arrangement for creating a bellows of a passage or the side panel between two vehicles joined in an articulated manner according to one of the afore-mentioned claims,
**characterized in that**
with a bellows (30), a slit (36) is provided in the corner region of the bellows (30), wherein at least one seam (39) is also provided in the region of the slit (36).

9. The arrangement for creating a bellows of a passage or the side panel between two vehicles joined in an articulated manner according to claims 4, 7 or 8 or claims 5 or 6, if dependent on claim 4,
**characterized in that**
the seams (29, 39) run up the entire height of the pleat wall (22, 32).

## Revendications

1. Assemblage pour la réalisation d'un soufflet (30) pour un passage ou une paroi latérale (20) entre deux véhicules (1, 2) couplés et articulés entre eux, par exemple un véhicule sur rails ou un bus articulé, dans lequel l'assemblage comporte une pluralité de plis (21, 31) disposés cote à cote, et,
au moins d'un coté de la pluralité de plis (21, 31), respectivement une ondulation (27, 37) est ménagée dans un pli, les extrémités du pli et de l'ondulation correspondante sont reliés entre elles,
**caractérisé en ce qu'**une pluralité de plis (21, 31) comporte une fente (26, 26a, 36, 36a) disposée sur leur coté intérieur, en particulier au moins approximativement au milieu d'une paroi latérale ou au milieu d'une section de paroi latérale, de plafond ou de sol, d'un soufflet en forme de tunnel (30), dans la zone de pliure (24, 34),
et **en ce que** les faces des plis (22, 32) de deux plis adjacents (21, 31) sont reliées entre elles dans la zone de la fente (26, 26a, 36, 36a).

2. Assemblage pour la réalisation d'un soufflet pour un passage ou une paroi latérale entre deux véhicules couplés et articulés entre eux, selon la revendication 1,
**caractérisé en ce que**
les extrémités du pli (21, 31) et de l'ondulation (27, 37) sont reliées dans la direction transversale par un cadre en forme de U (40).

3. Assemblage pour la réalisation d'un soufflet pour un passage ou une paroi latérale entre deux véhicules couplés et articulés entre eux, selon la revendication 1 ou la revendication 2,
**caractérisé en ce que**
l'ondulation (27, 37) ainsi que le pli (21, 31) sont constitués par un élément porteur, par exemple un tissu, revêtu d'un matériau synthétique, par exemple un élastomère.

4. Assemblage pour la réalisation d'un soufflet pour un passage ou une paroi latérale entre deux véhicules couplés et articulés entre eux, selon l'une des revendications précédentes,
**caractérisé en ce que**
la liaison est obtenue au moyen d'une couture (29, 39) qui s'étend sur la hauteur des faces des plis (22, 32).

5. Assemblage pour la réalisation d'un soufflet pour un passage ou une paroi latérale entre deux véhicules couplés et articulés entre eux, selon l'une des revendications précédentes,
**caractérisé en ce que**
le pli (21, 31) est en contact avec la face frontale de la carrosserie sur un de ses bords longitudinaux et au moins un, et de préférence les deux bords latéraux, dans la zone de jonction avec la face frontale de la carrosserie d'une parte du véhicule.

6. Assemblage pour la réalisation d'un soufflet pour un passage ou une paroi latérale entre deux véhicules couplés et articulés entre eux, selon l'une des revendications précédentes,
**caractérisé en ce que**
les faces du pli (22, 32), comportent, dans la zone de transfert vers la face frontale de la carrosserie du véhicule (1, 2) un cadre (45) par lequel le soufflet ou sa face latérale est liée à la face frontale du véhicule.

7. Assemblage pour la réalisation d'un soufflet pour un passage ou une paroi latérale entre deux véhicules couplés et articulés entre eux, selon l'une des revendications précédentes,
**caractérisé en ce que**
la paroi latérale (20) comporte en outre, deux plis voisins (21) pour la couture médiale des parois (22) de deux plis voisins (21), au moyen d'une couture (29) aux extrémités supérieure et inférieure de la paroi latérale (20) ainsi que dans la zone d'une fente (26).

8. Assemblage pour la réalisation d'un soufflet pour un passage ou une paroi latérale entre deux véhicules couplés et articulés entre eux, selon l'une des revendications précédentes,
**caractérisé en ce que**
sur un soufflet (30), une fente (36) est respectivement prévue dans la zone angulaire correspondante du soufflet (30), au moins une couture (39) étant également prévue dans la zone de la fente (36).

9. Assemblage pour la réalisation d'un soufflet pour un passage ou une paroi latérale entre deux véhicules couplés et articulés entre eux, selon les revendications 4,7 ou 8 ou selon les revendications 5 ou 6, si elles dépendent de la revendication 4,
**caractérisé en ce que**
les coutures (29, 39) s'étendent sur la hauteur des faces des plis (22, 32).
